# FASCICULE DE BREVET EUROPEEN

(11) **EP 0 958 454 B1**
(45) Date de publication et mention de la délivrance du brevet: **04.06.2003**
(21) Numéro de dépôt: 98958282.0
(22) Date de dépôt: 30.11.1998
(51) Int. Cl.: F15B 1/10, F16F 9/08

(54) **SPHERE OU ACCUMULATEUR A MEMBRANE, PAR EXEMPLE POUR SUSPENSION HYDROPNEUMATIQUE DE VEHICULE AUTOMOBILE**
KUGEL ODER MEMBRANSPEICHER, Z.B. FÜR HYDROPNEUMATISCHE FAHRZEUGAUFHÄNGUNG
SPHERE OR ACCUMULATOR WITH MEMBRANE, SUCH AS FOR MOTOR VEHICLE HYDROPNEUMATIC SUSPENSION

(30) Priorité: 05.12.1997 FR 9715420
(43) Date de publication de la demande: 24.11.1999
(73) Titulaire: AUTOMOBILES PEUGEOT, 75116 Paris (FR); AUTOMOBILES CITROEN, 92200 Neuilly-sur-Seine (FR)
(72) Inventeur: DARROUX, Jean-Luc, F-82290 Montbeton (FR)
(74) Mandataire: Bentz, Jean-Paul
(86) Numéro de dépôt international: FR9802573
(87) Numéro de publication internationale: WO99030041

(56) Documents cités:
- EP-A- 0 052 169
- EP-A- 0 777 065
- FR-A- 2 588 324
- GB-A- 2 051 955
- US-A- 4 181 156
- US-A- 4 638 838
- US-A- 5 072 795

## Description

La présente invention concerne un accumulateur ou une sphère pneumatique pour une suspension hydropneumatique de véhicule automobile par exemple.

De façon classique, une sphère pneumatique comprend une enveloppe extérieure rigide, par exemple métallique, composée d'une partie supérieure et d'une partie inférieure reliées ensemble ou formées monobloc, et une membrane souple déformable fixée à l'intérieur de l'enveloppe, au niveau de la zone de jonction entre les parties supérieure et inférieure. La membrane définit ainsi une chambre supérieure destinée à recevoir un gaz et une chambre inférieure destinée à recevoir par exemple un liquide. Dans ce cas, la chambre inférieure communique par l'intermédiaire d'un embout de raccordement avec par exemple le circuit hydraulique de la suspension d'un véhicule.

Une telle sphère est déjà utilisée pour remplacer le ressort d'une suspension de type Mac Pherson.

A l'intérieur de la sphère, la pression du liquide est généralement comprise entre 0 et 250 bars en fonctionnement normal.

De façon accidentelle, la pression peut augmenter considérablement, pouvant atteindre plusieurs fois la pression d'utilisation.

On a alors pu constater que la sphère éclate et que des composants intérieurs sont éjectés violemment de la sphère.

Ceci constitue un danger important pour l'utilisateur du vehicule.

L'invention a ainsi pour but d'éviter les inconvénients précités et de proposer une sphère notamment pneumatique pour une suspension hydropneumatique de véhicule automobile par exemple, permettant d'éviter l'éjection de débris de pièces lors de l'ouverture de la sphère soumise à une pression exceptionnelle, cette sphère contribuant ainsi à la sécurité de l'utilisateur du véhicule.

L'invention concerne donc une sphère pneumatique, comprenant une enveloppe rigide et une membrane souple déformable disposée à l'intérieur de cette enveloppe pour définir une chambre supérieure destinée à contenir un gaz sous pression et une chambre inférieure destinée à recevoir par exemple un liquide, caractérisée en ce qu'elle comprend, dans la chambre supérieure, un moyen associé à l'enveloppe ou à la membrane pour percer ladite membrane en cas de surpression dans la chambre inférieure et ainsi réduire la pression dans cette chambre.

Dans un premier mode de réalisation, ce moyen est une calotte associée à la partie supérieure de l'enveloppe et comportant au moins un trou.

Dans un deuxième mode de réalisation, ce moyen est une calotte associée à la partie supérieure de l'enveloppe et comportant, sur sa face concave, au moins une griffe ou analogue en saillie vers l'intérieur de l'enveloppe.

De façon préférée, la calotte comporte, sur sa face convexe, au moins une rainure qui aboutit à un trou pratiqué dans la calotte.

Selon un mode préféré de réalisation, la calotte comporte trois rainures radiales, chacune d'elles aboutissant à un trou pratiqué dans la calotte.

Dans une variante de réalisation, la calotte est rendue solidaire par son bord d'un insert annulaire rigide servant à fixer le bord périphérique de la membrane sur l'enveloppe et à réduire le volume mort dans la chambre supérieure.

Dans une autre variante de réalisation, la calotte est sensiblement hémisphérique et forme un insert annulaire rigide servant à fixer le bord périphérique de la membrane sur l'enveloppe et à réduire le volume mort dans la chambre supérieure.

Enfin, lorsque la chambre supérieure contient un gaz sous pression, elle est de préférence obturée par un élément inamovible, notamment soudé sur l'enveloppe.

L'invention sera mieux comprise et d'autres buts, avantages et caractéristiques de celle-ci apparaîtront plus clairement à la lecture de la description suivante, relative à des modes non limitatifs de réalisation de l'invention et sur lesquels :
La figure 1 représente en coupe axiale un premier mode de réalisation de la sphère selon l'invention, avec la membrane en position de repos sur la demi-vue gauche et avec la membrane en position basse extrême sur la demi-vue droite.
La figure 2 est une vue en perspective de la calotte représentée à la figure 1.
La figure 3 est une vue en perspective de la calotte selon un deuxième mode de réalisation de la sphère de l'invention.
La figure 4 est une vue en perspective d'une calotte et d'un insert selon un troisième mode de réalisation de la sphère de l'invention.
La figure 5 est une vue en coupe axiale de la sphère selon l'invention, conforme à la figure 1, avec la membrane en position haute extrême représentée partiellement.

Les éléments communs aux différentes figures seront désignés par les mêmes repères.

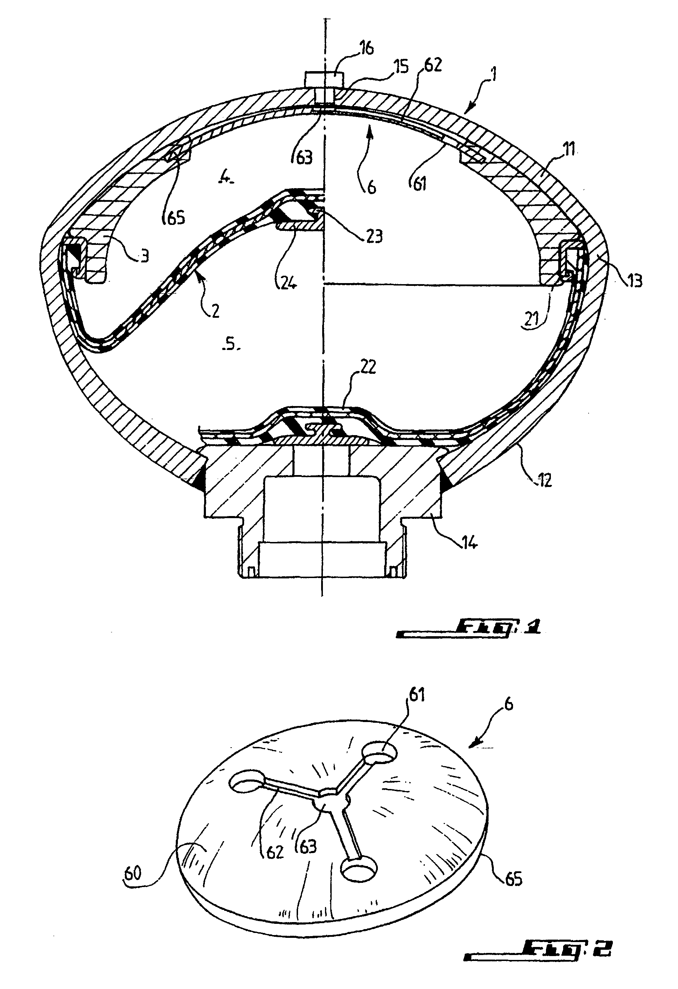

En référence à la figure 1, la sphère selon l'invention comporte une enveloppe externe 1, par exemple métallique, ayant une forme générale sensiblement aplatie.

L'enveloppe 1 comporte une partie supérieure 11 et une partie inférieure 12 séparées par une zone de jonction 13.

La partie inférieure 12 présente une forme sensiblement hémisphérique, tronquée à sa base pour la fixation de l'embout de raccordement 14.

Dans l'exemple de réalisation illustré à la figure 1, la partie supérieure 11 de l'enveloppe 1 présente une forme convexe dont la courbure est orientée vers l'intérieur de la sphère.

La sphère comporte également une membrane souple déformable 2 qui est fixée à l'intérieur de l'enveloppe 1, au niveau de la zone de jonction 13.

Dans l'exemple de réalisation illustré à la figure 1, la membrane 2 est fixée à l'intérieur de l'enveloppe au moyen d'un insert 3. Ainsi, l'insert annulaire rigide 3 est conformé de manière à retenir le bord périphérique 21 de la membrane 2 contre la surface interne de l'enveloppe 1. Il a également pour objet de combler le volume mort situé notamment au-dessus du bord périphérique 21.

La membrane 2 définit ainsi une chambre supérieure 4 renfermant un gaz et une chambre inférieure 5 destinée à recevoir par exemple un liquide.

Lorsque la sphère est destinée à être utilisée dans une suspension hydropneumatique de véhicule automobile, la chambre supérieure 4 contient un gaz sous pression qui est injecté par un orifice 15 situé au sommet de l'enveloppe 1.

Dans l'exemple représenté sur la figure 1, la membrane 2 est du type multicouches. Elle est étanche et il n'est donc pas nécessaire de réinjecter du gaz, après la fabrication de la sphère. C'est pourquoi l'orifice 15 est obturé par un élément inamovible 16 qui peut notamment être soudé.

La chambre inférieure 5 de la sphère communique, par l'intermédiaire d'un embout de raccordement, avec le circuit hydraulique de la suspension du véhicule (non représenté).

La sphère selon l'invention comporte également une calotte 6 qui est placée contre la partie supérieure 11 de l'enveloppe 1, au niveau de son sommet.

Cette calotte 6 est retenue dans la position illustrée à la figure 1 au moyen de l'insert 3. Dans l'exemple illustré à la figure 1, le bord 65 de la calotte 6 est fixé à l'intérieur d'un évidemment pratiqué dans le bord supérieur de l'insert 3.

La calotte 6 comporte, sur sa face convexe 60, un trou 61 et une rainure 62 qui s'étend depuis le sommet 63 de la calotte en regard de l'orifice 15 jusqu'au trou 61.

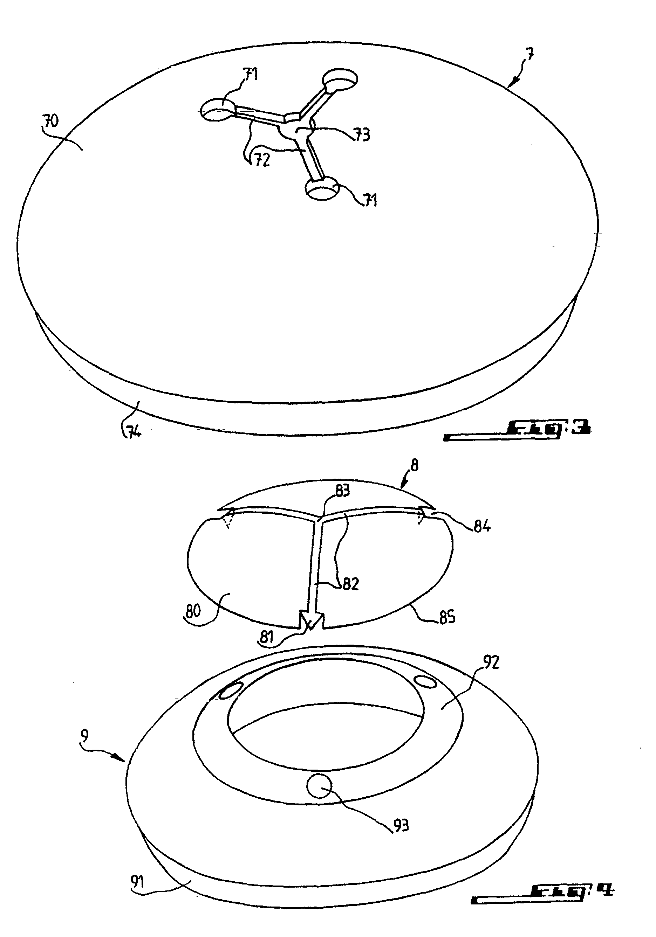

Comme l'illustre de façon plus précise la figure 2, la calotte 6 présente de préférence trois trous 61 et trois rainures radiales 62, chacune s'étendant depuis le sommet 63 de la calotte 6 jusqu'à un trou 61.

Ces rainures 62 ont pour objet de faciliter le passage du gaz à l'intérieur de la chambre supérieure 4, lorsque celui-ci est injecté à travers l'orifice 15.

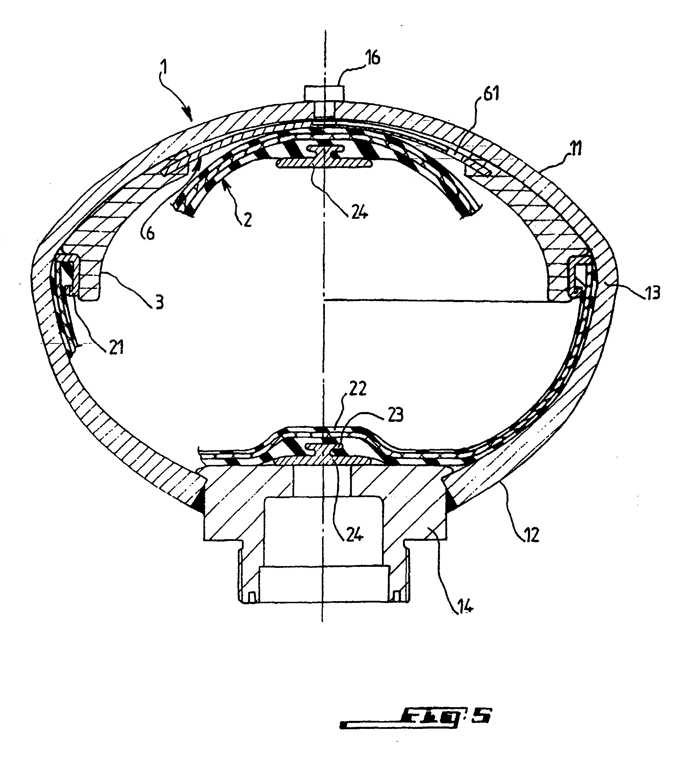

Sous l'effet de la pression du liquide qui passe par l'embout 14, la membrane 2 est déplaçable à l'intérieur de l'enveloppe 1 entre une position extrême basse, représentée sur la demi-vue droite de la figure 1 et une position haute extrême, représentée à la figure 5.

En position basse extrême, la membrane 2 présente une forme générale hémisphérique.

La figure 1 montre que la membrane 2 est plus épaisse dans sa zone centrale 22, dans laquelle est noyé un téton de fixation 23 solidaire d'une plaque en forme de disque 24 qui est fixée sous cette zone centrale 22.

Lorsque la membrane est en position basse extrême, cette plaque 24 est en contact avec l'embout de raccordement 14.

Dans la position haute extrême illustrée à la figure 5, c'est la partie supérieure de la zone centrale 22 de la membrane 2 qui est en contact avec le centre de la calotte 6. La membrane n'est pas en contact avec les orifices 61 dans cette position.

Sur la demi-vue gauche de la figure 1, la membrane 2 est représentée dans une position intermédiaire.

En conditions normales de fonctionnement, la membrane 2 se déplace donc entre sa position basse extrême et sa position haute extrême. La pression à l'intérieur de l'enveloppe 1 est alors comprise entre 0 et 250 bars.

De façon exceptionnelle, la pression du liquide à l'intérieur de l'enveloppe 1 peut augmenter de façon considérable.

Dans ce cas, la membrane 2 vient se plaquer contre la calotte 6 et une partie de la membrane pénètre à l'intérieur des trous 61.

Sous l'effet de la pression qui règne dans la chambre inférieure 5, la membrane 2 est percée au niveau des orifices 61.

Ainsi, si l'enveloppe externe 1 se fissure sous l'effet de la pression, le gaz s'échappe de l'enveloppe sans créer de détonation et ensuite, le liquide s'écoule de l'enveloppe 1.

Le percement de la membrane 2, en cas de surpression à l'intérieur de l'enveloppe 1, permet de libérer progressivement l'énergie hydraulique en faisant chuter la pression dans la chambre 5, ce qui supprime tout risque d'éjection de débris de pièces et notamment de la plaque 24.

Un autre mode de réalisation de la sphère selon l'invention va maintenant être décrit en référence a la figure 3.

La calotte 7 présente une forme sensiblement hémisphérique. Elle est destinée à être placée contre la paroi interne de la chambre supérieure 4 de la sphère selon l'invention.

A sa partie supérieure, la calotte 7 comporte des éléments similaires à ceux de la calotte 6 illustrée à la figure 1. Elle présente ainsi, sur sa face convexe 70, trois rainures radiales 72 qui s'étendent chacune depuis le sommet 73 de la calotte jusqu'à un trou 71.

La partie inférieure de la calotte 7 remplit la même fonction que l'insert annulaire 3 prévu dans le mode de réalisation illustré à la figure 1. Ainsi, la calotte 7 retient le bord périphérique 21 de la membrane 2 contre la surface interne de l'enveloppe 1, grâce à son bord inférieur 74. De surcroît, la calotte permet de combler le volume mort situé au-dessus du bord périphérique de la membrane.

En cas de surpression, la sphère selon l'invention équipée d'une calotte 7 se comporte comme expliqué pour la sphère illustrée à la figure 1.

La figure 4 illustre encore un autre mode de réalisation de la calotte et de l'insert de la sphère selon l'invention.

La calotte 8 est destinée à être rendue solidaire de l'insert 9, comme la calotte 6 illustrée à la figure 1 qui est supportée par l'insert 3.

Dans cet exemple de réalisation, la calotte 8 comporte, en saillie sur sa face concave, au moins une griffe 81 ou analogue.

Dans l'exemple illustré à la figure 4, la calotte 8 comporte trois griffes 81.

La calotte 8 comporte également, sur sa face convexe 80, trois rainures 82 qui s'étendent chacune depuis le sommet 83 de la calotte jusqu'à un trou 84.

Dans l'exemple illustré à la figure 4, les griffes 81 sont en bordure des trous 84.

L'insert annulaire 9 comporte un rebord 91 destiné à maintenir le bord périphérique de la membrane contre la surface interne de l'enveloppe 1.

L'insert 9 comporte, sur son bord supérieur 92, des orifices 93 dans lesquels peuvent s'engager les griffes 81 de la calotte 8 qui est alors rendue solidaire de l'insert 9 par son bord 85. L'ensemble formé par la calotte 8 et l'insert 9 présente alors une forme sensiblement hémisphérique, comme l'ensemble formé par la calotte 6 et l'insert 3 illustré à la figure 1.

Le comportement de la sphère selon l'invention, équipée de la calotte et de l'insert illustrés à la figure 4, est le suivant.

En fonctionnement normal, la membrane déformable 2 peut se déplacer à l'intérieur de l'enveloppe 1 entre une position basse extrême dans laquelle elle est en contact avec l'embout de raccordement 14 et une position haute extrême dans laquelle la partie supérieure de sa zone centrale 22 vient en contact avec le centre de la calotte.

Cependant, dans cette position haute extrême, la membrane 2 ne vient jamais en contact avec les griffes 81. On se trouve dans la situation illustrée à la figure 5, pour la calotte 6 représentée à la figure 1.

Cependant, en cas de surpression dans la chambre inférieure 5, la membrane 2 vient se plaquer contre la calotte 8. La membrane est alors percée par les griffes 81.

Comme pour le mode de réalisation de la sphère illustré à la figure 1, le percement de la membrane en cas de surpression à l'intérieur de la sphère permet d'éviter l'éjection de débris de pièces de la sphère.

Dans les exemples illustrés sur les figures, le moyen permettant de percer la membrane en cas de surpression est associé à l'enveloppe. On pourrait également prévoir d'autres moyens de percement de la membrane, associés à la membrane elle-même.

Dans ces exemples, la partie supérieure 11 de l'enveloppe 1 présente une forme convexe et un insert est prévu pour combler le volume mort situé au-dessus du bord périphérique de la membrane.

Cependant, l'invention n'est pas limitée à ce mode de réalisation. On peut prévoir d'autres formes de l'enveloppe permettant également de réduire le volume mort et donc la fatigue de la membrane.

En particulier, la partie supérieure de l'enveloppe peut former en section axiale une ligne en S, le bord périphérique de la membrane étant alors retenu par une collerette circulaire fixée au niveau de la zone de jonction entre les parties supérieure et inférieure de l'enveloppe. On peut notamment se référer à cet égard à la demande de brevet francais N° 2 741 913.

L'invention peut également s'appliquer à des sphères classiques qui ne comportent pas de dispositions particulières pour réduire la fatigue de la membrane.

Par ailleurs, l'enveloppe externe 1 peut être réalisée en tous matériaux appropriés, par exemple en acier ou en inox. La membrane peut être du type multicouches par exemple avec deux couches en caoutchouc entourant une couche en alcool polyvinylique. Elle peut également être du type monocouche, par exemple en polyuréthane ou nitrile.

Enfin, on a qualifié les différentes parties de la sphère de "supérieure" ou "inférieure", mais la sphère peut être disposée d'une manière quelconque, par exemple inclinée, horizontale ou tête en bas.

Enfin, les repères insérés après les caractéristiques techniques figurant dans les revendications ont pour seul but de faciliter la compréhension de ces dernières et ne sauraient en limiter la portée.

## Revendications

1. Sphère pneumatique, comportant une enveloppe rigide (1) et une membrane souple déformable (2) disposée à l'intérieur de cette enveloppe pour définir une chambre supérieure (4), destinée à contenir un gaz sous pression et une chambre inférieure (5), destinée à recevoir par exemple un liquide, **caractérisée en ce qu'**elle comprend dans la chambre supérieure (4), un moyen (6, 7, 8) associé à l'enveloppe (1) ou à la membrane (2) pour percer ladite membrane en cas de surpression dans la chambre inférieure (5) et ainsi réduire la pression dans cette chambre.

2. Sphère selon la revendication 1, **caractérisée en ce que** le moyen est une calotte (6, 7) associée à la partie supérieure de l'enveloppe (1) et comportant au moins un trou (61, 71).

3. Sphère selon la revendication 1, **caractérisée en ce que** le moyen est une calotte (8) associée à la partie supérieure de l'enveloppe (1) et comportant sur sa face concave, au moins une griffe (81) ou analogue en saillie vers l'intérieur de l'enveloppe (1).

4. Sphère selon la revendication 2 ou 3, **caractérisée en ce que** la calotte (6, 7, 8) comporte, sur sa face convexe (60, 70, 80), au moins une rainure (62, 72, 82) qui aboutit à un trou (61, 71, 84) pratiqué dans la calotte.

5. Sphère selon la revendication 4, **caractérisée en ce que** la calotte (6, 7, 8) comporte trois rainures radiales (62, 72, 82), chacune d'elles aboutissant à un trou (61, 71, 84) pratiqué dans la calotte.

6. Sphrère selon l'une des revendications 2 à 5, **caractérisée en ce que** la calotte (6, 8) est rendue solidaire par son bord (65, 85) d'un insert annulaire rigide (3, 9) servant à fixer le bord périphérique (21) de la membrane (2) sur l'enveloppe (1) et à réduire le volume mort dans la chambre supérieure (4) .

7. Sphère selon l'une des revendications 2 à 5, **caractérisée en ce que** la calotte (7) est sensiblement hémisphérique et forme un insert annulaire rigide servant à fixer le bord périphérique (21) de la membrane (2) sur l'enveloppe (1) et à réduire le volume mort dans la chambre supérieure (4).

8. Sphère selon l'une des revendications 1 à 7, **caractérisée en ce que** la chambre supérieure (4) contenant le gaz sous pression est obturée par un élément inamovible (16), notamment soudé.

## Claims

1. A pneumatic sphere including a rigid envelope (1) and a deformable flexible membrane (2) disposed inside said envelope to define an upper chamber (4) intended to contain a pressurised gas and a lower chamber (5) intended to receive a liquid, for example, **characterised in that** it includes in the upper chamber (4) means (6, 7, 8) associated with the envelope (1) or the membrane (2) for piercing said membrane in the event of an overpressure in the lower chamber (5) and thereby reducing the pressure in said chamber.

2. A sphere according to claim 1, **characterised in that** the means comprise a dome (6, 7) associated with the upper portion of the envelope (1) and including at least one hole (61, 71).

3. A sphere according to claim 1, **characterised in that** the means comprise a dome (8) associated with the upper portion of the envelope (1) and having on its concave face at least one claw (81) or the like projecting towards the interior of the envelope (1).

4. A sphere according to claim 2 or claim 3, **characterised in that** the dome (6, 7, 8) has on its convex face (60, 70, 80) at least one groove (62, 72, 82) terminating in a hole (61, 71, 84) in the dome.

5. A sphere according to claim 4, **characterised in that** the dome (6, 7, 8) has three radial grooves (62, 72, 82) each terminating in a hole (61, 71, 84) in the dome.

6. A sphere according to any of claims 2 to 5, **characterised in that** an edge (65, 85) of the dome (6, 8) is fastened to a rigid annular insert (3, 9) for fixing the peripheral edge (21) of the membrane (2) to the envelope (1) and reducing the dead volume in the upper chamber (4).

7. A sphere according to any of claims 2 to 5, **characterised in that** the dome (7) is substantially hemispherical and forms a rigid annular insert for fixing the peripheral edge (21) of the membrane (2) to the envelope (1) and reducing the dead volume in the upper chamber (4).

8. A sphere according to any of claims 1 to 7, **characterised in that** the upper chamber (4) containing the pressurised gas is closed by a member (16) that is not removable, for example welded to it.

## Patentansprüche

1. Pneumatikkugel mit einer starren Hülle (1) und einer verformbaren, nachgiebigen Membran (2), die innerhalb dieser Hülle angeordnet ist, um eine obere Kammer (4) zu definieren, die dazu bestimmt ist, ein unter Druck stehendes Gas zu enthalten, sowie eine untere kammer (5), die dazu bestimmt ist, beispielsweise eine Flüssigkeit aufzunehmen, **dadurch gekennzeichnet, dass** sie in der oberen Kammer (4) ein der Hülle (1) bzw. der Membran (2) zugeordnetes Mittel (6, 7, 8) aufweist, um die genannte Membran bei Überdruck in der unteren Kammer (5) zu durchstoßen und somit den Druck in dieser Kammer zu vermindern.

2. Kugel nach Anspruch 1, **dadurch gekennzeichnet, dass** das Mittel eine Kappe (6, 7) ist, die dem oberen Teil der Hülle (1) zugeordnet ist und zumindest ein Loch (61, 71 ) aufweist.

3. Kugel nach Anspruch 1, **dadurch gekennzeichnet, dass** das Mittel eine Kappe (8) ist, die dem oberen Teil der Hülle (1) zugeordnet ist und an ihrer konkaven Seite zumindest eine ins Innere der Hülle (1) ragende Klaue (81) oder dergleichen enthält.

4. Kugel nach Anspruch 2 oder 3, **dadurch gekennzeichnet, dass** die Kappe (6, 7, 8) an ihrer konvexen Seite (60, 70, 80) zumindest eine Rille (62, 72, 82) enthält, die in das in der Kappe ausgeführte Loch (61, 71, 84) führt.

5. Kugel nach Anspruch 4, **dadurch gekennzeichnet, dass** die Kappe (6, 7, 8) drei radiale Rillen (62, 72, 82) enthält, die jeweils in ein in der Kappe ausgeführtes Loch (61, 71, 84) führen.

6. Kugel nach einem der Ansprüche 2 bis 5, **dadurch gekennzeichnet, dass** die Kappe (6, 8) an ihrem Rand (65, 85) mit einem starren, ringförmigen Einsatz (3, 9) verbunden ist, der dazu dient, den Umfangsrand (21) der Membran (2) an der Hülle (1) zu befestigen und den toten Raum in der oberen Kammer (4) zu vermindern.

7. Kugel nach einem der Ansprüche 2 bis 5, **dadurch gekennzeichnet, dass** die Kappe (7) im wesentlichen halbkugelförmig ist und einen starren, ringförmigen Einsatz bildet, der dazu dient, den Umfangsrand (21) der Membran (2) an der Hülle (1) zu befestigen und den toten Raum in der oberen Kammer (4) zu vermindern.

8. Kugel nach einem der Ansprüche 1 bis 7, **dadurch gekennzeichnet, dass** die das unter Druck stehende Gas enthaltende obere Kammer (4) mit einem nicht abnehmbaren, insbesondere angeschweißten Teil (16) verschlossen ist.
